# FASCICULE DE BREVET EUROPEEN

(11) **EP 3 327 306 B1**
(45) Date de publication et mention de la délivrance du brevet: **15.05.2019**
(21) Numéro de dépôt: 17203095.9
(22) Date de dépôt: 22.11.2017
(51) Int. Cl.: F16D 13/75

(54) **MECANISME D'EMBRAYAGE A RATTRAPAGE D'USURE, NOTAMMENT POUR VEHICULE AUTOMOBILE, ET DISPOSITIF D'EMBRAYAGE**
KUPPLUNGSVORRICHTUNG MIT VERSCHLEISSAUSGLEICH, INSBESONDERE FÜR KRAFTFAHRZEUG, UND KUPPLUNGSVORRICHTUNG
CLUTCH MECHANISM WITH WEAR COMPENSATION, IN PARTICULAR FOR MOTOR VEHICLE, AND CLUTCH DEVICE

(30) Priorité: 24.11.2016 FR 1661458
(43) Date de publication de la demande: 30.05.2018
(73) Titulaire: Valeo Embrayages, 80009 Amiens Cedex 2 (FR)
(72) Inventeur: LEBAS, Gilles, 80009 Amiens (FR); COMMEINE, Emmanuel, 80009 Amiens (FR)
(74) Mandataire: Cardon, Nicolas

(56) Documents cités:
- FR-A1- 2 768 476
- FR-A1- 3 009 592
- FR-A1- 3 014 976

## Description

La présente invention concerne un dispositif d'embrayage à rattrapage d'usure, notamment pour véhicule automobile.

Un dispositif d'embrayage comporte classiquement un plateau de réaction, un plateau de pression mobile et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis au travers du dispositif d'embrayage.

Un dispositif d'embrayage à rattrapage d'usure est connu du document FR 2 780 119. Ce dispositif comporte un couvercle à l'intérieur duquel est monté un plateau de pression destiné à venir en appui sur un disque de friction, un diaphragme intercalé entre le couvercle et le plateau de pression, servant à l'actionnement du plateau de pression entre une position totalement embrayée dans laquelle le dit plateau de pression est poussé contre le disque de friction, et une position totalement débrayée dans laquelle ledit plateau de pression est écarté du disque de friction par l'intermédiaire de moyens de rappel du plateau de pression.

Des moyens de rattrapage de l'usure du disque de friction sont intercalés entre le diaphragme et le plateau de pression, et comprennent au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position angulaire de la rampe par rapport à la contre-rampe.

Le dispositif comporte en outre des moyens de détection de l'usure aptes à autoriser le déplacement de l'organe de rattrapage mobile en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage et comportant une rampe coopérant avec une contre-rampe tournée du côté du plateau de pression.

Le dispositif comporte enfin un organe presseur venant contraindre les rampes desdits organes mobiles contre les contre-rampes associées, l'organe presseur étant apte à coopérer avec une butée fixe, de manière à libérer lesdits organes mobiles lorsqu'une usure du disque de friction est détectée.

L'organe de rattrapage mobile est sollicité à l'aide d'un ressort, de façon à rattraper le jeu entre celui-ci et l'organe presseur, lorsque ledit organe de rattrapage mobile est libéré par l'organe presseur et par le diaphragme. Par ailleurs, l'organe de détection mobile est sollicité par un autre ressort de façon à rattraper le jeu entre celui-ci et l'organe presseur, lorsque ledit organe de détection mobile est libéré par l'organe presseur et par le diaphragme.

En fonctionnement, l'ensemble est soumis, de façon alternée, à des phases successives d'embrayage et de débrayage.

En phase d'embrayage, le diaphragme appuie sur le plateau de pression, par l'intermédiaire de l'organe de rattrapage de jeu. En phase de débrayage, le plateau de pression est rappelé vers sa position de débrayage, par l'intermédiaire de moyens de rappel prenant généralement la forme de languettes élastiquement déformables.

Lorsque le disque de friction n'est pas usé et que les contre-matériaux des plateaux de pression et de réaction ne sont pas usés, l'organe presseur maintient constamment l'organe de détection et l'organe de rattrapage en appui sur le disque de pression : lesdits organes sont immobilisés.

En cas d'usure, l'organe presseur vient en appui sur la butée et un jeu se crée entre l'organe presseur et l'organe de détection. Comme ce dernier est contraint par un ressort, il est déplacé de façon à combler le jeu précité. En position embrayée, l'effort appliqué par le diaphragme sur l'organe de rattrapage empêche le déplacement de ce dernier, par appui et frottement sur le plateau de pression. Ensuite, lorsque le diaphragme est déplacé dans sa position débrayée, les languettes de rappel du plateau de pression tendent à plaquer le plateau de pression contre l'organe de rattrapage de jeu, et l'organe de rattrapage de jeu contre le diaphragme. L'effort exercé par les languettes de rappel est relativement faible de façon à autoriser, malgré les frottements en jeu, un déplacement de l'organe de rattrapage de jeu, sous l'effet de la contrainte appliquée par le ressort correspondant. Ce déplacement permet de rattraper le jeu entre l'organe presseur et l'organe de rattrapage. On rattrape ainsi l'usure du plateau de friction ainsi que l'usure des contre-matériaux des plateaux de pression et de réaction associés.

Un tel fonctionnement nécessite notamment l'utilisation de moyens de rappel du plateau de pression exerçant des efforts relativement faibles, pour permettre le déplacement de l'organe de rattrapage malgré les frottements en jeu. Ceci nuit au fonctionnement car de tels moyens de rappel peuvent transmettre des vibrations axiales et générer des phénomènes de pompage du plateau de pression.

Afin de remédier à cet inconvénient, la demande de brevet FR 3 009 592, au nom de la Demanderesse, propose un dispositif d'embrayage à rattrapage d'usure, notamment pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression. Le dispositif d'embrayage comprend un mécanisme de rattrapage d'usure comportant :
- des moyens de rattrapage de l'usure du disque de friction étant intercalés entre le diaphragme et le plateau de pression, lesdits moyens de rattrapage d'usure comportant au moins un organe de rattrapage mobile dans une plage déterminée et comportant une rampe coopérant avec une contre-rampe tournée du côté du plateau de pression, de façon à ajuster la distance entre le diaphragme et le plateau de pression et compenser l'usure du disque de friction en fonction de la position de la rampe par rapport à la contre-rampe,
- des moyens de détection de l'usure aptes à autoriser le déplacement dudit organe de rattrapage mobile en cas d'usure du disque de friction et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe tournée du côté du plateau de pression,
- au moins un organe presseur venant contraindre au moins la rampe de l'organe de détection contre la contre-rampe associée, l'organe presseur étant apte à coopérer avec une butée fixe de manière à libérer lesdits organes mobiles lorsqu'une usure du disque de friction est détectée,
- l'organe de rattrapage mobile étant sollicité de façon à se déplacer lorsque ledit organe de rattrapage mobile est libéré par le diaphragme,
- l'organe de détection mobile étant sollicité de façon à se déplacer et rattraper, au moins en partie, le jeu entre celui-ci et l'organe presseur, lorsque ledit organe de détection mobile est libéré par l'organe presseur et par le diaphragme.

De plus, le diaphragme libère l'organe de détection mobile et empêche le déplacement de l'organe de rattrapage mobile, en position totalement embrayée, et le diaphragme libère l'organe de rattrapage mobile et empêche le déplacement de l'organe de détection mobile, en position totalement débrayée, le diaphragme venant toujours en appui sur l'un au moins desdits organes mobiles entre ses positions totalement embrayée et totalement débrayée.

De cette manière, les moyens de rappel du plateau de pression peuvent exercer un effort important, cet effort étant repris par l'organe de rattrapage mobile puis par le diaphragme, ou par l'organe de détection mobile puis par le diaphragme, en fonction de la position du diaphragme. En effet, lors de leurs déplacements, lesdits organes mobiles ne sont pas soumis à l'effort exercé par les moyens de rappel du plateau de pression et il est donc possible de solliciter aisément leur déplacement, en cas d'usure.

Comme indiqué précédemment, le fait de disposer de moyens de rappel du plateau de pression exerçant un effort important, tels par exemple que des languettes ressorts ayant une forte raideur, permet de limiter la transmission des vibrations axiales et d'éviter les phénomènes de pompage du plateau de pression.

L'organe de détection mobile et l'organe de rattrapage mobile sont sollicités par des organes élastiques, par exemple des ressorts de traction.

En particulier, au moins un premier ressort de traction s'étendant circonférentiellement est monté entre l'organe de détection et le plateau de pression, ou entre l'organe de détection et un couvercle couplé en rotation au plateau de pression. Des seconds ressorts de traction s'étendant circonférentiellement sont montés entre l'organe de détection et l'organe de rattrapage. Ces seconds ressorts assurent la fonction de motorisation de l'organe de rattrapage par rapport à l'organe de détection.

Il existe un besoin d'éviter toute surcompensation ou sous-compensation de l'usure, tout en garantissant le bon fonctionnement de l'ensemble des éléments du dispositif d'embrayage, en particulier le fonctionnement du diaphragme.

A cet effet, la présente invention propose un mécanisme d'embrayage à rattrapage d'usure, notamment pour véhicule automobile, comportant :
- un plateau de pression actionné par un diaphragme, - des moyens de détection et de rattrapage d'usure, aptes à rattraper l'usure du disque de friction, les moyens de détection et de rattrapage d'usure étant intercalés entre un couvercle et le plateau de pression, lesdits moyens de détection et de rattrapage d'usure comportant :
- des moyens de rattrapage d'usure intercalés entre le diaphragme et le plateau de pression, lesdits moyens de rattrapage d'usure comportant au moins un organe de rattrapage mobile dans une plage déterminée et comportant une rampe coopérant avec une contre-rampe formée dans le plateau de pression, de façon à ajuster la distance entre le diaphragme et le plateau de pression et compenser l'usure correspondante en fonction de la position de la rampe par rapport à la contre-rampe,
- des moyens de détection de l'usure aptes à autoriser le déplacement dudit organe de rattrapage mobile en cas d'usure et aptes à empêcher un tel déplacement lorsque cette usure n'est pas suffisante, lesdits moyens de détection comportant au moins un organe de détection mobile, dans une plage déterminée, par rapport à l'organe de rattrapage mobile et comportant une rampe coopérant avec une contre-rampe formée dans le plateau de pression,
   l'organe de rattrapage mobile étant sollicité de façon à se déplacer lorsque ledit organe de rattrapage mobile est libéré par le diaphragme,
- au moins un organe presseur venant contraindre au moins la rampe de l'organe de détection contre la contre-rampe associée, l'organe presseur étant apte à coopérer avec une butée fixe de manière à libérer l'organe de détection lorsqu'une usure est détectée,
   l'organe de détection mobile étant sollicité de façon à se déplacer et à rattraper, au moins en partie, le jeu entre celui-ci et l'organe presseur, lorsque ledit organe de détection mobile est libéré par l'organe presseur et par le diaphragme,
- au moins un organe de butée relié à l'organe presseur, l'organe de butée étant conçu pour écarter l'organe presseur de l'organe de détection et/ou de l'organe de rattrapage en cas d'usure,
   le diaphragme comportant au moins une partie annulaire à partir de laquelle des doigts s'étendent radialement vers l'intérieur, l'organe de butée traversant au moins un orifice ménagé dans la partie annulaire du diaphragme.
   l'organe de butée traverse le diaphragme dans une zone qui est soumise à des contraintes mécaniques relativement faibles. En effet, il s'avère que, en fonctionnement, les contraintes mécaniques sont les plus importantes au niveau des zones de liaison entre les doigts et la partie annulaire du diaphragme, tandis que les contraintes sont plus faibles au sein de la partie annulaire.

Les orifices sont donc ménagés dans une zone de plus faibles contraintes, ce qui permet de limiter l'impact de la présence des orifices sur la tenue mécanique et sur le fonctionnement du diaphragme.

Si l'on définit par ri le rayon interne de la partie annulaire et par re le rayon externe de la partie annulaire, chaque orifice du diaphragme est situé intégralement dans une zone située radialement entre les rayons re et ri, de préférence dans une zone située radialement à l'extérieur d'un rayon r où r = ri + (re-ri)/2. En d'autres termes, dans le dernier cas, chaque orifice du diaphragme est intégralement situé dans la moitié radialement externe de la partie annulaire.

L'organe de butée peut être relié à l'organe presseur dans une zone située radialement à proximité immédiate de l'organe de détection et/ou de l'organe de rattrapage.

L'organe de butée peut être relié à l'organe presseur dans une zone située radialement à une distance comprise entre 1 et 10 mm de l'organe de détection et/ou de l'organe de rattrapage.

L'organe de butée peut être relié à l'organe presseur dans une zone dépourvue d'élément intercalaire située radialement entre l'organe de butée et l'organe de détection d'une part et/ou l'organe de butée et l'organe de rattrapage d'autre part.

L'organe de butée peut être relié à l'organe presseur dans une zone située radialement entre l'organe de détection et l'organe de rattrapage.

On limite ainsi tout risque de basculement de l'organe presseur, un tel basculement ayant une influence sur les positions des zones d'appui réelles de l'organe presseur sur l'organe de détection et/ou sur l'organe de rattrapage. La caractéristique précitée permet ainsi de maîtriser la position desdits organes mobiles, de façon à garantir le bon fonctionnement des moyens de détection et de rattrapage d'usure correspondants et éviter une surcompensation ou une sous-compensation de l'usure.

L'organe de butée peut être relié à l'organe presseur dans une zone située radialement à mi-distance entre l'organe de détection et de l'organe de rattrapage.

L'organe de butée peut être relié à l'organe presseur dans une zone située radialement à l'extérieur de l'organe de rattrapage ou dans une zone située radialement à l'intérieur de l'organe de détection.

Chaque orifice du diaphragme peut être décalé radialement vers l'intérieur par rapport à la périphérie radialement externe de la partie annulaire du diaphragme.

En d'autres termes, chaque orifice est situé dans la partie annulaire de telle façon qu'il existe de la matière radialement à l'extérieur dudit orifice, de façon à pouvoir résister efficacement aux contraintes mécaniques.

En variante, chaque orifice du diaphragme débouche radialement au niveau de la périphérie radialement externe de la partie annulaire du diaphragme.

Dans ce cas, chaque orifice se présente sous la forme d'une encoche dont les bords peuvent être parallèles ou obliques l'un par rapport à l'autre, par exemple s'évasant vers l'extérieur.

L'organe presseur peut exercer un effort presseur réparti entre l'organe de détection et l'organe de rattrapage et la composante axiale de cet effort suivant l'axe X peut être appliquée sur un rayon d'application situé entre l'organe de détection et l'organe de rattrapage.

L'organe de rattrapage mobile et l'organe de détection mobile peuvent être concentriques.

Par ailleurs, l'organe de butée peut comporter une extrémité reliée à une partie fixe ou mobile du dispositif d'embrayage, et une extrémité reliée à l'organe presseur.

L'organe de détection et l'organe de rattrapage, de forme générale circulaire, peuvent comprendre au moins une zone pourvue de renflements dans laquelle lesdits organes mobiles sont localement écartés l'un de l'autre dans la direction radiale, l'organe presseur venant appuyer sur les extrémités correspondantes des organes mobiles au niveau de ladite zone pourvue de renflements.

L'extrémité de l'organe de butée qui est reliée à l'organe presseur peut être logée dans ladite zone pourvue de renflements.

L'organe presseur peut comporter une partie s'étendant radialement, apte à venir en appui sur l'organe de détection mobile et/ou sur l'organe de rattrapage mobile correspondant, l'organe de butée étant relié à ladite partie radiale de l'organe presseur.

L'organe presseur peut comporter deux parties s'étendant circonférentiellement à l'opposé l'une de l'autre depuis la partie radiale de l'organe presseur, l'extrémité libre de chaque partie circonférentielle étant fixée, par exemple par rivetage, au plateau de pression.

L'invention concerne également un dispositif d'embrayage comportant un mécanisme d'embrayage du type précité, un plateau de réaction destiné à être couplé en rotation à un arbre menant, et un disque de friction, destiné à être couplé à un arbre mené, le plateau de pression étant actionné par le diaphragme, de façon à serrer ou libérer le disque de friction sur le plateau de réaction.

Le mécanisme d'embrayage ou le dispositif d'embrayage selon l'invention peuvent également comporter l'une ou plusieurs des caractéristiques suivantes :
- les moyens de rattrapage d'usure sont intercalés entre le diaphragme et le plateau de pression,
- le plateau de pression est rappelé vers sa position débrayée, à l'opposé du plateau de réaction, par des moyens de rappel élastique, tels par exemple que des premières languettes élastiques de rappel montées entre le plateau de pression, d'une part, et le plateau de réaction ou le couvercle, d'autre part,
- lesdites languettes élastiques assurent le couplage en rotation du plateau de réaction et du plateau de pression,
- l'embrayage est du type normalement fermé,
- le diaphragme est monté basculant autour de zones d'appui du couvercle,
- la ou les zones d'appui du diaphragme sur le couvercle sont situées radialement à l'intérieur de la ou des zones d'appui du diaphragme sur l'organe de rattrapage d'usure et/ou sur l'organe de détection,
- le couvercle comporte des brides radiales servant à la fixation sur le plateau de réaction, raccordées à une partie annulaire s'étendant axialement entourant, au moins en partie, le plateau de pression, le diaphragme, ladite partie annulaire axiale du couvercle étant prolongée par une partie annulaire s'étendant radialement vers l'intérieur,
- les zones d'appui du diaphragme sur le couvercle sont situées dans la partie annulaire radiale du couvercle,
- la contre-rampe est ménagée sur le plateau de pression,
- l'angle des rampes desdits organes mobiles et de la contre-rampe associée est compris entre 2 et 20°.
- l'organe de détection est situé radialement à l'intérieur de l'organe de rattrapage d'usure correspondant,
- un premier organe élastique, tel par exemple qu'un ressort de traction s'étendant circonférentiellement, est monté entre l'organe de détection, d'une part et le couvercle ou le plateau de pression, d'autre part,
- un second organe élastique, tel par exemple qu'un ressort en forme d'épingle, est monté entre l'organe de détection et l'organe de rattrapage,
- le premier organe élastique exerce un effort tangentiel ou circonférentiel supérieur à l'effort tangentiel ou circonférentiel exercé par le second organe élastique,
- la longueur du premier organe élastique est importante, de façon à pouvoir solliciter le déplacement de l'organe de détection sur une grande plage angulaire, par exemple de l'ordre de 120°,
- chaque organe presseur se présente sous la forme d'une languette élastique exerçant un effort axial,
- l'organe de butée comporte une première extrémité fixée, par exemple par rivetage, radialement entre l'organe de détection et l'organe de rattrapage d'usure correspondant, de préférence radialement à mi-distance entre lesdits organes mobiles, et une seconde extrémité cylindrique formant une tête élargie de plus grande dimension que le reste du plot et définissant un épaulement,
- la tête élargie du plot de butée est apte à venir en appui sur une surface radiale du couvercle,
- ladite surface radiale est formée par le fond d'un lamage, par exemple un lamage ménagé dans la partie annulaire radiale du couvercle,
- la tête élargie du plot de butée est destinée à venir en appui sur la surface radiale correspondante lorsque le déplacement du plateau de pression correspondant est important, c'est-à-dire lorsqu'il existe une usure importante des garnitures du disque de friction et/ou des contre-matériaux du plateau de pression et du plateau de réaction associés.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective avec écorché partiel, d'une partie d'un dispositif d'embrayage selon une forme de réalisation de l'invention,
- la figure 2 est une vue éclatée, en perspective, d'une partie du dispositif,
- la figure 3 est une vue en coupe axiale d'une partie du dispositif d'embrayage,
- la figure 4 est une demi-vue en coupe d'une partie du dispositif,
- la figure 5 est une vue éclatée, en perspective, d'une partie du dispositif,
- les figures 6 et 7 sont des vues schématiques illustrant le fonctionnement du dispositif, en l'absence d'usure,
- les figures 8 à 11 sont des vues schématiques illustrant le fonctionnement du dispositif, en cas d'usure,
- les figures 12 et 13 sont des vues de face du diaphragme, selon deux autres formes de réalisation de l'invention,
- les figures 14a, 14b et 14c sont des vues de détail d'une partie du dispositif, illustrant différentes variantes de réalisation de l'invention.

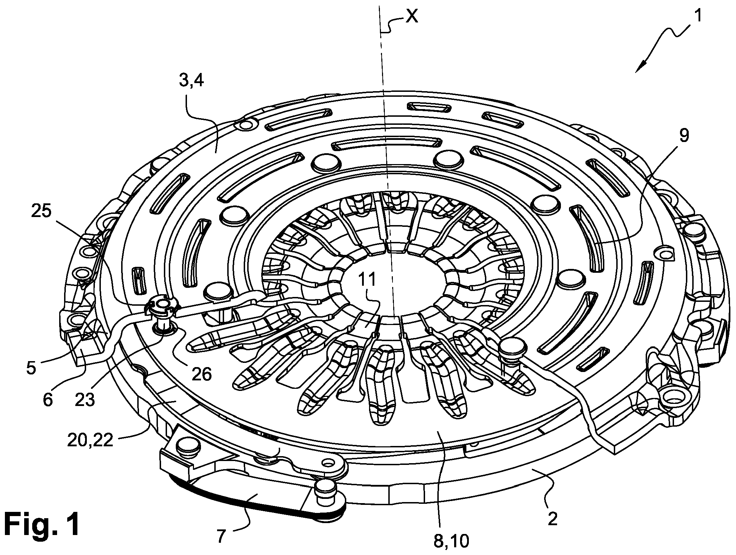

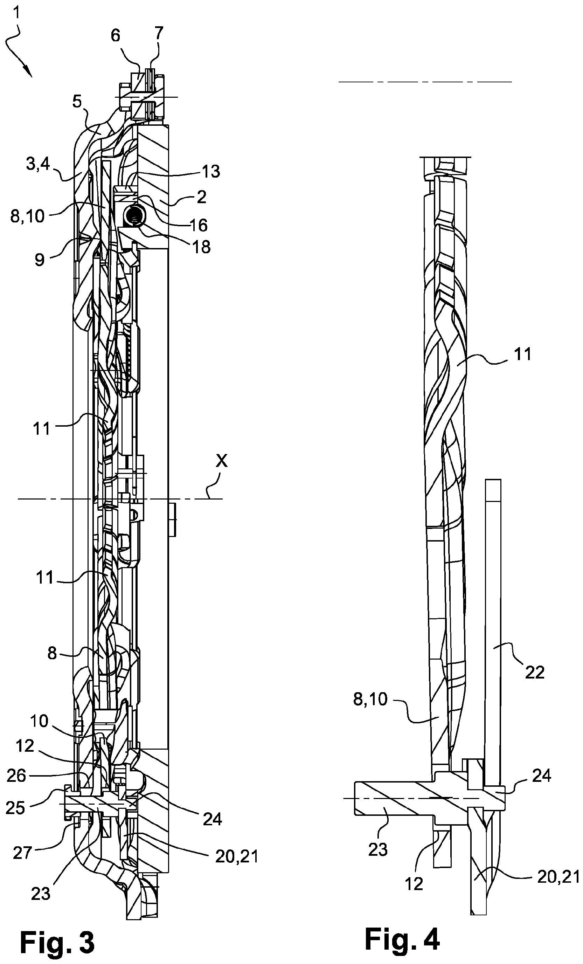

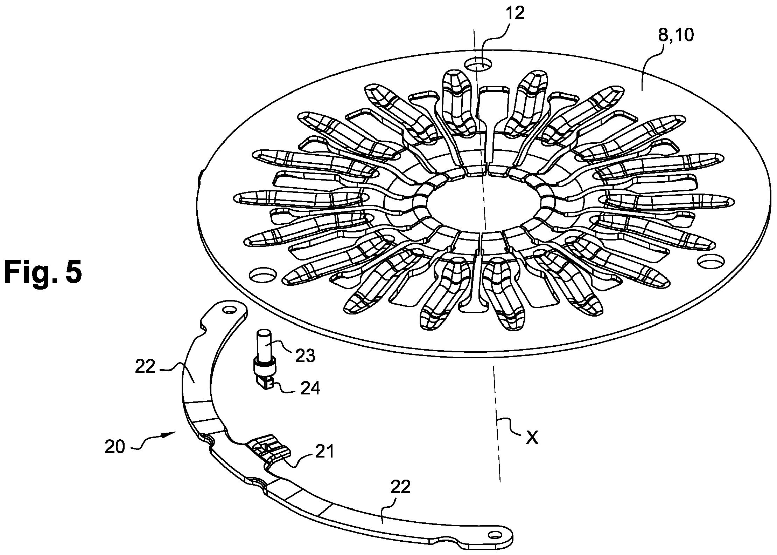

Une partie d'un dispositif d'embrayage à rattrapage d'usure selon une forme de réalisation de l'invention est représenté aux figures 1 à 5. Celui-ci est destiné à coupler un moteur avec un arbre d'entrée d'une boîte de vitesses (non représenté). L'axe du dispositif d'embrayage est référencé X. Le dispositif comporte un mécanisme d'embrayage 1 à rattrapage d'usure comprenant un plateau de pression 2 et un plateau de réaction 35 entre lesquels s'étend un disque de friction 34. Le plateau de pression 2 est couplé en rotation au plateau de réaction, par l'intermédiaire d'un couvercle 3 du mécanisme d'embrayage 1, et est mobile en translation par rapport à celui-ci, entre une position embrayée et une position débrayée, dans lesquelles il serre le disque de friction sur le plateau de réaction, ou respectivement libère le disque de friction.

Le plateau de réaction 35 est fixé sur un couvercle 3, lui-même destiné à être couplé à l'arbre du moteur. Le couvercle 3 comporte une partie radiale annulaire 4 dont la périphérie radialement externe est prolongée par une partie annulaire 5 s'étendant axialement. L'extrémité libre de la partie annulaire axiale 5 est équipée d'une bride annulaire 6 s'étendant radialement vers l'extérieur et servant à la fixation du couvercle 3 sur le plateau de réaction.

Le disque de friction est destiné à être couplé à l'arbre d'entrée de la boîte de vitesses. Ainsi, en position embrayée du mécanisme d'embrayage, l'arbre du moteur est couplé à l'arbre d'entrée de la boîte de vitesses.

Comme illustré à la figure 1, des languettes élastiques de rappel 7 sont montées entre le plateau de pression 2 et le couvercle 6.

Le mécanisme d'embrayage 1 comporte de plus un diaphragme 8 se présentant sous la forme d'une tôle annulaire élastique, et est monté basculant autour de zones d'appui 9 formés dans la partie radiale 4 du couvercle 3.

Le diaphragme comporte une partie annulaire 10 à partir de laquelle des doigts 11 s'étendent radialement vers l'intérieur. Des orifices 12, ici au nombre de trois, sont ménagés dans la partie annulaire 10. Si l'on définit par *ri* le rayon interne de la partie annulaire 10 et par *re* le rayon externe de la partie annulaire 10, chaque orifice 12 du diaphragme 8 est de préférence situé intégralement dans une zone située radialement à l'extérieur d'un rayon *r* où *r* = *ri* + *(re-ri)*/*2.* En d'autres termes, chaque orifice 12 du diaphragme 8 est intégralement situé dans la moitié radialement externe de la partie annulaire 10, qui est une zone dans laquelle les contraintes mécaniques exercées en fonctionnement sont relativement faibles.

Chaque orifice 12 présente par exemple une section circulaire. D'autres formes, par exemple à section ovale, sont également possibles.

La commande du mécanisme d'embrayage se fait classiquement au moyen d'une butée d'embrayage (non représentée) coopérant avec la périphérie radialement interne des doigts 11 du diaphragme 8. Le diaphragme 8 forme un levier transmettant la force appliquée par la butée de commande au plateau de pression 2.

Le mécanisme d'embrayage 1 est du type normalement fermé. La position de repos du diaphragme 8 correspond donc à un état embrayé du mécanisme d'embrayage. En position de repos du diaphragme 8, c'est-à-dire lorsque la butée d'embrayage n'exerce pas ou peu d'effort sur le diaphragme 8, le diaphragme 8 exerçant l'effort de plaquage nécessaire pour transmettre le couple moteur au sein du dispositif d'embrayage sur le plateau de pression 2. Le plateau de pression 2 est écarté du plateau de réaction par l'intermédiaire des languettes élastiques 7, de manière à libérer le disque de friction grâce à l'action de la butée de débrayage sur les doigts du diaphragme.

Afin de compenser l'usure du disque de friction , le mécanisme d'embrayage 1 est équipé de moyens de détection et de rattrapage d'usure.

Les moyens de rattrapage et de détection d'usure sont intercalés axialement entre le plateau de pression 2 et le diaphragme 8.

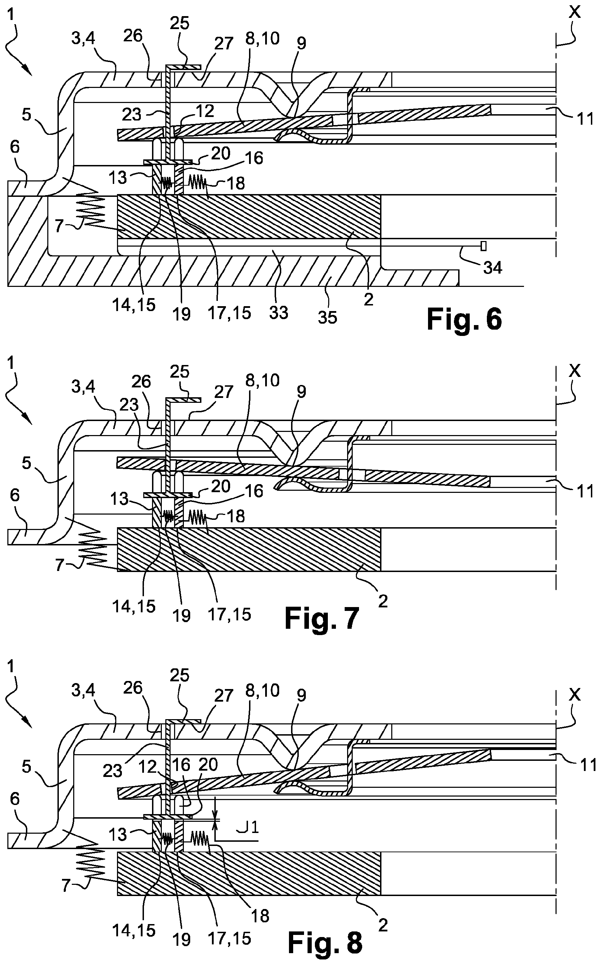

Les moyens de rattrapage et de détection d'usure comportent un organe de rattrapage 13 mobile se présentant sous la forme d'un anneau comportant une extrémité contre laquelle le diaphragme 8 est apte à venir en appui, et une extrémité comportant au moins une rampe 14 s'étendant circonférentiellement, coopérant avec une contre-rampe 15 associée ménagée directement sur le plateau de pression 2 (voir notamment figure 6). Bien entendu, la contre-rampe 15 peut être formée par une pièce indépendante et fixée sur le plateau de pression 2.

Les moyens de rattrapage et de détection d'usure comportent également un organe de détection 16 mobile se présentant sous la forme d'un anneau ayant une extrémité contre laquelle le diaphragme 8 est apte à venir en appui, et une extrémité comportant au moins une rampe 17 s'étendant circonférentiellement, coopérant avec la contre-rampe 15 du plateau de pression 2.

A titre d'exemple, l'angle des rampes 14, 17 desdits organes mobiles 13, 16 et de la contre-rampe 15 du plateau de pression 2 est compris entre 2 et 20°.

Les deux organes mobiles 13, 16 sont concentriques et séparés l'un de l'autre, l'organe de détection 16 étant situé radialement à l'intérieur de l'organe de rattrapage 13. En variante, les positions respectives desdits organes mobiles 13, 16 peuvent être inversées. On notera toutefois que la possibilité d'inversion des organes mobiles 13, 16 est liée à l'architecture interne du mécanisme.

Des moyens de centrage, tels par exemple que des plots, assurent le bon positionnement des organes mobiles 13, 16.

Au moins un premier organe élastique 18, tel par exemple qu'un ressort de traction s'étendant circonférentiellement, est monté entre l'organe de détection 16 et le plateau de pression 2.

Au moins un second organe élastique 19, tel par exemple qu'un ressort en forme d'épingle, est monté entre l'organe de détection 16 et l'organe de rattrapage 13.

La longueur du ressort 18 est importante, de façon à pouvoir solliciter le déplacement de l'organe de détection 16 sur une grande plage angulaire (par exemple de l'ordre de 120°).

Le dispositif 1 comporte également un organe presseur 20 comportant une partie centrale 21 s'étendant radialement et deux parties 22 s'étendant circonférentiellement à l'opposé l'une de l'autre depuis la partie radiale centrale 21, l'extrémité libre de chaque partie circonférentielle 22 étant fixée, par exemple par rivetage, au plateau de pression 2. L'organe presseur 20 s'étend ainsi circonférentiellement sur un angle compris entre 60° et 180°.

La partie centrale radiale 21 est apte à venir en appui sur l'organe de détection 16 et/ou sur l'organe de rattrapage 13, de façon à les contraindre en appui sur le plateau de pression 2.

Un organe de butée 23 est fixé sur la partie centrale 21 de l'organe presseur 20. L'organe est autrement appelé plot de butée lorsque celui-ci présente une forme générale de révolution. L'organe ou plot de butée 23 comporte en particulier une première extrémité 24 fixée, par exemple par rivetage, sur la partie centrale 21, radialement entre l'organe de détection 16 et l'organe de rattrapage 13 d'usure, de préférence radialement à mi-distance entre lesdits organes mobiles 13, 16, et une seconde extrémité cylindrique comportant une tête élargie 25 de plus grande dimension que le reste du plot 23 et définissant un épaulement. La tête 25 peut venir de matière avec le reste du plot ou être formé par un élément indépendant, par exemple par un écrou 25 vissé à l'extrémité correspondante du plot 23. Dans ce cas, la position axiale de la tête élargie 25 peut être ajustée par vissage ou dévissage de l'écrou 25.

Le plot 23 traverse l'un des orifices 12 du diaphragme 8 ainsi qu'un trou 26 du couvercle 3, la tête élargie 25 étant apte à venir en appui sur une surface de fond radiale 27 formée par un lamage ménagé dans le couvercle 3.

En particulier, la tête élargie 25 du plot de butée 23 est destinée à venir en appui sur la surface de fond 27 du lamage lorsque le déplacement du plateau de pression 2 est important, c'est-à-dire lorsqu'il existe une usure importante des garnitures du disque de friction et/ou des contre-matériaux du plateau de pression 2 et du plateau de réaction.

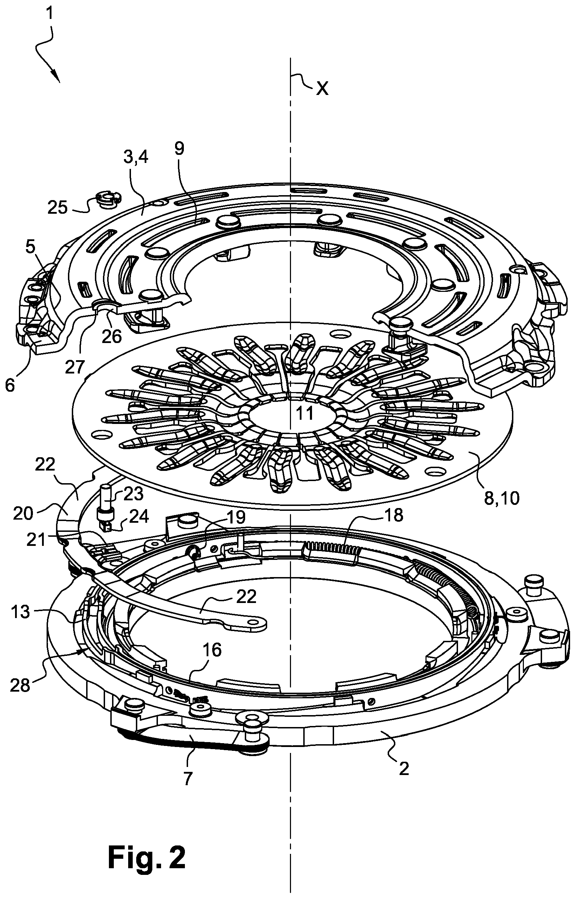

Afin de permettre la fixation de la première extrémité 24 du plot 23 sur partie centrale 21 de l'organe presseur 20, radialement entre les organes mobiles 13, 16, ceux-ci peuvent comporter au moins une zone 28 dans laquelle ils sont écartés l'un de l'autre, comme illustré à la figure 2. Les organes mobiles 13, 16 ont ainsi, en vue de face, une forme générale circulaire avec au moins une zone 28 pourvue de renflements dans laquelle les organes mobiles 13, 16 sont localement écartés l'un de l'autre dans la direction radiale, la partie centrale 21 de l'organe presseur 20 venant appuyer sur les extrémités correspondantes des organes mobiles 13, 16 au niveau de l'une des zones 28.

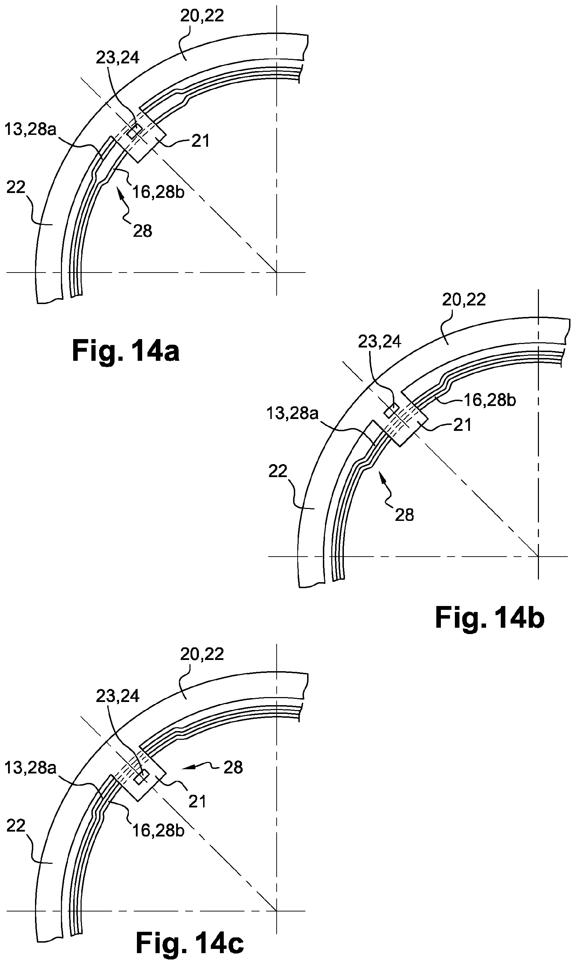

Une zone 28 est mieux visible à la figure 14a. Dans cette forme de réalisation, le renflement 28a de l'organe de rattrapage 13 est tourné radialement vers l'extérieur et le renflement 28b de l'organe de détection 16 est tourné radialement vers l'intérieur. L'organe de butée 23, en particulier l'extrémité 24, est située radialement entre les renflements 28a, 28b, plus particulièrement à mi-distance radiale entre lesdits renflements 28a, 28b.

Selon une variante de réalisation illustrée à la figure 14b, le renflement 28a de l'organe de rattrapage 13 est tourné radialement vers l'intérieur et le renflement 28b de l'organe de détection 116 est également tourné radialement vers l'intérieur. L'organe de butée 23, en particulier l'extrémité 24, est située radialement à l'extérieur desdits renflement 28a, 28b, tout en restant situé à proximité immédiate de ces derniers.

Selon une autre variante de réalisation illustrée à la figure 14c, le renflement 28a de l'organe de rattrapage 13 est tourné radialement vers l'extérieur et le renflement 28b de l'organe de détection 16 est également tourné radialement vers l'extérieur. L'organe de butée 23, en particulier l'extrémité 24, est située radialement à l'intérieur desdits renflement 28a, 28b, tout en restant situé à proximité immédiate de ces derniers.

Le fonctionnement des moyens de détection et rattrapage d'usure va maintenant être décrit en référence aux figures 6 à 12.

Comme cela est illustré schématiquement aux figures 6 et 7, les moyens de rattrapage et de détection d'usure sont inopérants lorsque les garnitures 33 du disque de friction 34 (figure 6) ne sont pas ou peu usées et que les contre-matériaux du plateau de pression 2 et du plateau de réaction 35 associé ne sont pas usés, par exemple lorsque l'usure axiale cumulée est inférieure à 0,05 mm.

Comme illustré à la figure 6, en position totalement embrayée et en l'absence d'usure, le diaphragme 8 vient en appui sur l'organe de rattrapage 13, de façon à repousser le plateau de pression 2 à l'encontre des languettes élastiques 7 de rappel. Le plateau de pression 2 et le plateau de réaction 35 (axialement fixe) enserrent alors le disque de friction 34 portant les garnitures 33. Dans cette position, la tête du plot de butée 23 affleure la surface de fond 27 du lamage du couvercle 3.

En outre, comme illustré à la figure 7, en position totalement débrayée et en l'absence d'usure, le diaphragme 8 vient en appui sur l'organe de détection 16, un jeu étant créé entre le diaphragme 8 et l'extrémité correspondante d'organe de rattrapage 13.

On constate que, en l'absence d'usure prononcée, l'organe presseur 20 et/ou le diaphragme 8 maintient l'organe de détection 16 et l'organe de rattrapage 13 en appui sur le plateau de pression 2, quelle que soit la phase de fonctionnement du mécanisme d'embrayage (embrayage/débrayage). Dans ce cas, le couple résistant généré par le frottement entre lesdits organes 13, 16 et le couvercle 3 est supérieur au couple exercé par les ressorts 18, 19. Lesdits organes 13, 16 sont donc immobilisés en rotation par rapport au couvercle 3, quelle que soit la phase de fonctionnement du mécanisme d'embrayage.

Les figures 8 à 12 illustrent le cas où les garnitures 33 du disque de friction 34 (ou encore les contre-matériaux du plateau de pression 2 et du plateau de réaction 35) présentent une usure importante, qu'il est nécessaire de rattraper afin d'éviter un disfonctionnement du mécanisme d'embrayage 1.

Dans ce cas, comme illustré à la figure 8, la tête 25 du plot de butée 23 vient en appui sur la surface de fond 27 du lamage du couvercle 3, en position totalement embrayée, de sorte que l'organe presseur 20 se décolle de l'extrémité secondaire correspondante de l'organe de détection 16. Un jeu j1 se forme donc entre ladite extrémité secondaire de l'organe de détection 16 et l'organe presseur 20.

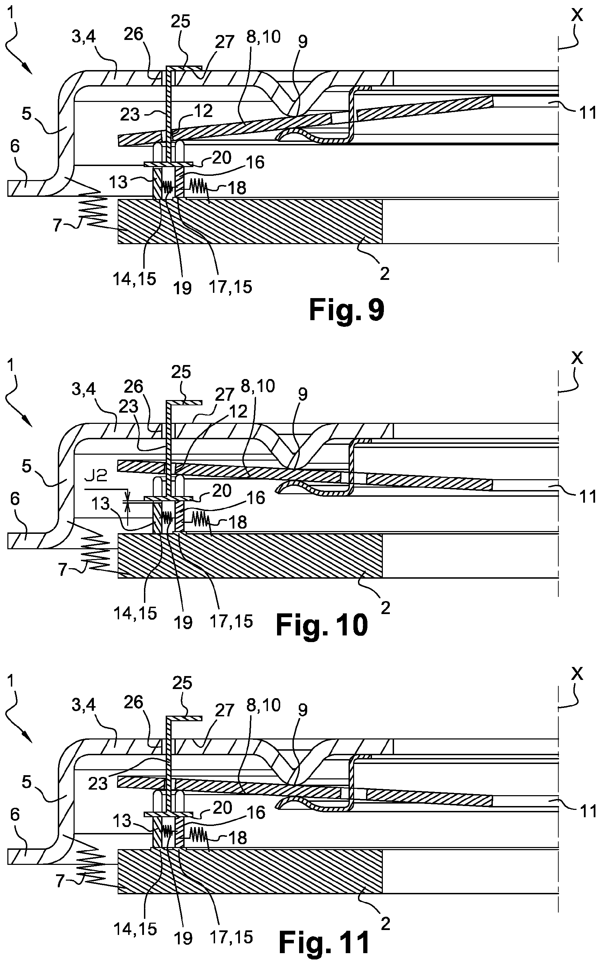

L'organe de détection 16, qui n'est alors plus soumis à un effort axial, est entraîné en rotation par l'organe élastique 18, de façon à combler au moins partiellement le jeu j1 (figure 9). Lors de cette rotation, le second organe élastique 19 est contraint.

La rotation de l'organe de détection 16 est par exemple stoppée lorsque l'extrémité secondaire correspondante de l'organe de détection 16 vient à nouveau en appui sur l'organe presseur 20. On notera que, durant cette phase, l'organe de rattrapage 13 est maintenu en appui sur le plateau de pression 2 par le diaphragme 8. Il est donc immobilisé en rotation par rapport au plateau de pression 2.

Lors de la phase de débrayage suivante, le diaphragme 8 transfère son appui de l'organe de rattrapage 13 vers l'organe de détection 16.

Les figures 10 et 11 sont des vues illustrant les positions de ces éléments lors d'un tel transfert. Lors d'un tel débrayage, le plateau de pression 2 est écarté du plateau de réaction 35 par l'intermédiaire des languettes de rappel 7, de manière à libérer le disque de friction 34.

Comme illustré à la figure 10, lorsque le diaphragme 8 est en position totalement débrayée, il libère totalement l'organe de rattrapage 13. Dans cette position, l'organe de détection 16 est maintenu fixe en rotation par appui sur le diaphragme 8 et sur le plateau de pression 2. Par ailleurs, la tête 25 du plot de butée 23 est écartée de la surface de fond 27 du lamage du couvercle 3 et l'organe presseur 20 est écarté d'un jeu j2 par rapport à l'extrémité correspondante de l'organe de rattrapage 13.

L'organe de rattrapage 13, contraint par le second organe élastique 19, est donc entraîné en rotation comme illustré à la figure 11, de manière à combler tout ou partie du jeu j2 entre ledit organe de rattrapage 13 et l'organe presseur 20, de manière à se retrouver dans la position illustrée à la figure 6.

Le pivotement de l'organe de rattrapage 13 et de l'organe de détection 16 par rapport au plateau de pression 2 permet, par l'intermédiaire des rampes 14, 17 et de la contre-rampe 15, d'augmenter la distance axiale entre le plateau de pression 2 et la zone d'appui du diaphragme 8 sur lesdits organes, ce qui permet de compenser progressivement l'usure des garnitures 33 du disque de friction 34 et/ou l'usure des contre-matériaux du plateau de pression 2 et du plateau de réaction 35.

Une telle structure permet également de conserver l'angle de fonctionnement du diaphragme 8, de manière à maintenir un effort de précharge constant et réduire les contraintes mécaniques.

On notera que les moyens de rappel du plateau de pression 2 (formés par les languettes élastiques 7) peuvent exercer un effort important, cet effort étant repris par l'organe de rattrapage 13 mobile puis par le diaphragme 8, ou par l'organe de détection 16 mobile puis par le diaphragme 8 correspondant, en fonction de la position du diaphragme 8. En effet, lors de leurs déplacements, lesdits organes mobiles 13, 16 ne sont pas soumis à l'effort exercé par les moyens de rappel 7 du plateau de pression 2 et il est donc possible de solliciter aisément leur déplacement à l'aide des ressorts 18, 19, en cas d'usure.

Le fait de disposer de moyens de rappel 7 du plateau de pression 2 exerçant un effort important, tels par exemple que des languettes ressorts 7 ayant une forte raideur, permet de limiter la transmission des vibrations axiales et d'éviter les phénomènes de pompage.

On notera également que l'organe presseur 20 est fixé au plateau de pression 2 et n'est donc pas soumis à des phénomènes de fatigue dus aux cycles d'embrayage et de débrayage en fonctionnement.

Par ailleurs, le fait de relier le plot de butée 23 à l'organe presseur 20, dans une zone située entre l'organe de détection 16 et l'organe de rattrapage 13, permet de contrôler au mieux les positions axiales des différents organes mobiles 13, 16, et donc la correction d'usure qui en découle. On évite ou limite ainsi toute surcompensation ou sous-compensation de l'usure.

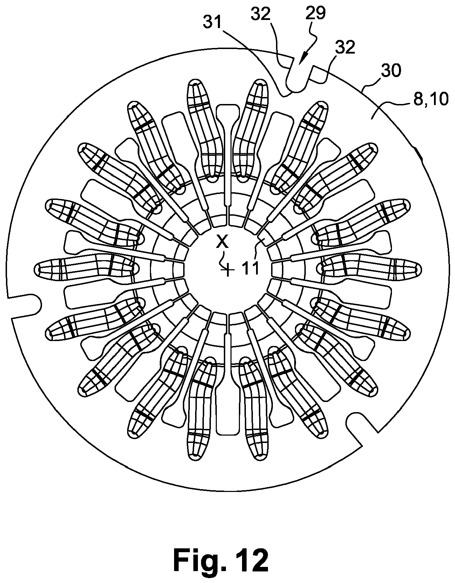

La figure 12 illustre un diaphragme 8 selon une autre forme de réalisation de l'invention dans laquelle les orifices 12 sont remplacés par des encoches 29 débouchant radialement vers l'extérieur, au niveau de la périphérie radialement externe 30 de la partie annulaire 10 du diaphragme 8. Chaque encoche 29 comporte une partie radialement interne hémicirculaire 31 et deux bords latéraux 32 parallèles l'un par rapport à l'autre. Comme précédemment, le plot de butée 23 traverse l'une des encoches.

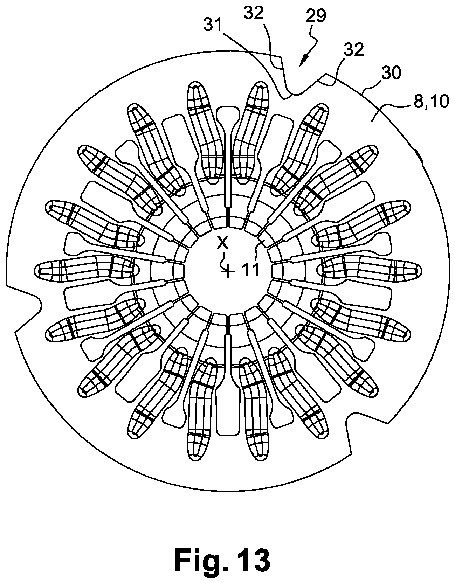

La figure 13 illustre un diaphragme 8 selon encore une autre forme de réalisation, qui diffère de celle exposée en référence à la figure 12 en ce que les bords latéraux 32 sont obliques et s'évasent radialement vers l'extérieur.

## Revendications

1. Mécanisme d'embrayage (1) à rattrapage d'usure, notamment pour véhicule automobile, comportant :
- un plateau de pression (2) actionné par un diaphragme (8),
- des moyens de détection et de rattrapage d'usure, aptes à rattraper l'usure du disque de friction, les moyens de détection et de rattrapage d'usure étant intercalés entre un couvercle (3) et le plateau de pression (2), lesdits moyens de détection et de rattrapage d'usure comportant :
- des moyens de rattrapage d'usure intercalés entre le diaphragme (8) et le plateau de pression (2), lesdits moyens de rattrapage d'usure comportant au moins un organe de rattrapage (13) mobile dans une plage déterminée et comportant une rampe (14) coopérant avec une contre-rampe (15) formée dans le plateau de pression (2), de façon à ajuster la distance entre le diaphragme (8) et le plateau de pression (2) et compenser l'usure correspondante en fonction de la position de la rampe (14) par rapport à la contre-rampe (15),
- des moyens de détection de l'usure aptes à autoriser le déplacement dudit organe de rattrapage (13) mobile en cas d'usure et aptes à empêcher un tel déplacement lorsque cette usure n'est pas suffisante, lesdits moyens de détection comportant au moins un organe de détection (16) mobile, dans une plage déterminée, par rapport à l'organe de rattrapage (13) mobile et comportant une rampe (17) coopérant avec une contre-rampe (15) formée dans le plateau de pression (2),
l'organe de rattrapage (13) mobile étant sollicité de façon à se déplacer lorsque ledit organe de rattrapage (13) mobile est libéré par le diaphragme (8),
- au moins un organe presseur (20) venant contraindre au moins la rampe (17) de l'organe de détection (16) contre la contre-rampe (15) associée, l'organe presseur (20) étant apte à coopérer avec une butée fixe (27) de manière à libérer l'organe de détection (16) lorsqu'une usure est détectée,
l'organe de détection (16) mobile étant sollicité de façon à se déplacer et à rattraper, au moins en partie, le jeu (J1) entre celui-ci et l'organe presseur (20), lorsque ledit organe de détection (16) mobile est libéré par l'organe presseur (20) et par le diaphragme (8),
- au moins un organe de butée (23) conçu pour écarter l'organe presseur (20) de l'organe de détection (16) et/ou de l'organe de rattrapage (13) en cas d'usure,
le diaphragme (8) comportant au moins une partie annulaire (10) à partir de laquelle des doigts (11) s'étendent radialement vers l'intérieur,
**caractérisé en ce que** l'organe de butée (23) est relié à l'organe presseur (20) et **en ce que** l'organe de butée (23) traverse au moins un orifice (12) ménagé dans la partie annulaire (10) du diaphragme (8).

2. Mécanisme d'embrayage (1) selon la revendication 1, **caractérisé en ce que** l'organe de butée (23) est relié à l'organe presseur (20) dans une zone située radialement à proximité immédiate de l'organe de détection (16) et/ou de l'organe de rattrapage (13).

3. Mécanisme d'embrayage (1) selon la revendication 1 ou 2, **caractérisé en ce que** l'organe de butée (23) est relié à l'organe presseur (20) dans une zone située radialement entre l'organe de détection (16) et l'organe de rattrapage (13).

4. Mécanisme d'embrayage (1) selon l'une des revendications 1 à 3, **caractérisé en ce que** l'organe de butée (23) est relié à l'organe presseur (20) dans une zone située radialement à mi-distance entre l'organe de détection (16) et de l'organe de rattrapage (13).

5. Mécanisme d'embrayage (1) selon la revendication 1 ou 2, **caractérisé en ce que** l'organe de butée (23) est reliée à l'organe presseur (20) dans une zone située radialement à l'extérieur de l'organe de rattrapage (13) ou dans une zone située radialement à l'intérieur de l'organe de détection (16).

6. Mécanisme d'embrayage (1) selon l'une des revendications 1 à 5, **caractérisé en ce que** chaque orifice (12) du diaphragme (8) est décalé radialement vers l'intérieur par rapport à la périphérie radialement externe (30) de la partie annulaire (10) du diaphragme (8).

7. Mécanisme d'embrayage (1) selon l'une des revendications 1 à 5, **caractérisé en ce que** chaque orifice (12) du diaphragme (8) débouche radialement au niveau de la périphérie radialement externe (30) de la partie annulaire (10) du diaphragme (8).

8. Mécanisme d'embrayage (1) selon l'une des revendications 1 à 7, **caractérisé en ce que** l'organe presseur (20) exerce un effort presseur réparti entre l'organe de détection (16) et l'organe de rattrapage (13) et la composante axiale de cet effort suivant l'axe X est appliquée sur un rayon d'application situé entre l'organe de détection (16) et l'organe de rattrapage (13).

9. Mécanisme d'embrayage (1) selon l'une des revendications 1 à 8, **caractérisé en ce que** l'organe de rattrapage (13) mobile et l'organe de détection (16) mobile sont concentriques.

10. Mécanisme d'embrayage (1) selon l'une des revendications 1 à 9, **caractérisé en ce que** l'organe de butée (23) comporte une extrémité (25) reliée à une partie fixe (3) du dispositif d'embrayage, par exemple reliée à un couvercle (6), et une extrémité (24) reliée à l'organe presseur (20).

11. Mécanisme d'embrayage (1) selon l'une des revendications 1 à 10, **caractérisé en ce que** l'organe de détection (16) et l'organe de rattrapage (13), de forme générale circulaire, comprennent au moins une zone (28) pourvue de renflements dans laquelle lesdits organes mobiles (13, 16) sont localement écartés l'un de l'autre dans la direction radiale, l'organe presseur (20) venant appuyer sur les extrémités correspondantes des organes mobiles (13, 16) au niveau de ladite zone (28) pourvue de renflements.

12. Mécanisme d'embrayage (1) selon l'une des revendications 1 à 11, **caractérisé en ce que** l'extrémité de l'organe de butée (23) qui est reliée à l'organe presseur (20) est logée dans ladite zone (28) pourvue de renflements.

13. Mécanisme d'embrayage (1) selon l'une des revendications 1 à 12, **caractérisé en ce que** l'organe presseur (20) comporte une partie (21) s'étendant radialement, apte à venir en appui sur l'organe de détection (16) mobile et/ou sur l'organe de rattrapage (13) mobile correspondant, l'organe de butée (23) étant relié à ladite partie radiale (21) de l'organe presseur (20).

14. Mécanisme d'embrayage (1) selon l'une des revendications 1 à 13, caractérisé en en ce que l'organe presseur (20) comporte deux parties (22) s'étendant circonférentiellement à l'opposé l'une de l'autre depuis la partie radiale (21) de l'organe presseur (20), l'extrémité libre de chaque partie circonférentielle (22) étant fixée, par exemple par rivetage, au plateau de pression (2).

15. Dispositif d'embrayage (1) comportant un mécanisme d'embrayage selon l'une des revendications 1 à 14, un plateau de réaction (35) destiné à être couplé en rotation à un arbre menant, et un disque de friction (33), destiné à être couplé à un arbre mené, le plateau de pression (2) étant actionné par le diaphragme (8), de façon à serrer ou libérer le disque de friction (33) sur le plateau de réaction (35).

## Patentansprüche

1. Kupplungsmechanismus (1) mit Verschleißausgleich, insbesondere für ein Kraftfahrzeug, umfassend:
- eine Druckplatte (2), die durch eine Membran (8) betätigt wird,
- Erfassungs- und Verschleißausgleichsmittel, die dazu geeignet sind, den Verschleiß der Reibscheibe auszugleichen, wobei die Erfassungs- und Verschleißausgleichsmittel zwischen einer Abdeckung (3) und der Druckplatte (2) angeordnet sind, wobei die Erfassungs- und Verschleißausgleichsmittel Folgendes umfassen:
- Verschleißausgleichsmittel, die zwischen der Membran (8) und der Druckplatte (2) angeordnet sind, wobei die Verschleißausgleichsmittel zumindest ein Ausgleichsorgan (13) umfassen, das in einem bestimmten Bereich beweglich ist und eine Rampe (14) umfasst, die mit einer in der Druckplatte (2) ausgebildeten Gegenrampe (15) zusammenwirkt, um den Abstand zwischen der Membran (8) und der Druckplatte (2) einzustellen und den entsprechenden Verschleiß in Abhängigkeit von der Position der Rampe (14) in Bezug auf die Gegenrampe (15) auszugleichen,
- Verschleißerfassungsmittel, die dazu geeignet sind, die Verschiebung des beweglichen Ausgleichsorgans (13) im Fall von Verschleiß zuzulassen, und dazu geeignet sind, eine solche Verschiebung zu verhindern, wenn dieser Verschleiß nicht ausreichend ist, wobei die Erfassungsmittel zumindest ein Erfassungsorgan (16) umfassen, das in einem bestimmten Bereich in Bezug auf das bewegliche Ausgleichsorgan (13) beweglich ist und eine Rampe (17) umfasst, die mit einer in der Druckplatte (2) ausgebildeten Gegenrampe (15) zusammenwirkt,
wobei das bewegliche Ausgleichsorgan (13) so vorgespannt ist, dass es sich verschiebt, wenn das bewegliche Ausgleichsorgan (13) durch die Membran (8) freigegeben wird,
- zumindest ein Pressorgan (20), das zumindest die Rampe (17) des Erfassungsorgans (16) gegen die zugeordnete Gegenrampe (15) zwingt, wobei das Pressorgan (20) dazu geeignet ist, mit einem festen Anschlag (27) zusammenzuwirken, um das Erfassungsorgan (16) freizugeben, wenn ein Verschleiß erfasst wird,
wobei das bewegliche Erfassungsorgan (16) vorgespannt ist, um sich zu verschieben und das Spiel (J1) zwischen selbigem und dem Pressorgan (20) auszugleichen, wenn das bewegliche Erfassungsorgan (16) durch das Pressorgan (20) und durch die Membran (8) freigegeben wird,
- zumindest ein Anschlagorgan (23), das dazu ausgelegt ist, im Fall von Verschleiß das Pressorgan (20) vom Erfassungsorgan (16) und/oder vom Ausgleichsorgan (13) zu beabstanden,
wobei die Membran (8) zumindest einen ringförmigen Abschnitt (10) umfasst, von dem sich Finger (11) radial nach innen erstrecken,
**dadurch gekennzeichnet, dass** das Anschlagorgan (23) mit dem Pressorgan (20) verbunden ist, und dadurch, dass das Anschlagorgan (23) zumindest durch eine im ringförmigen Abschnitt (10) der Membran (8) vorgesehene Öffnung (12) verläuft.

2. Kupplungsmechanismus (1) nach Anspruch 1, **dadurch gekennzeichnet, dass** das Anschlagorgan (23) mit dem Pressorgan (20) in einem Bereich verbunden ist, der sich radial in unmittelbarer Nähe des Erfassungsorgans (16) und/oder des Ausgleichsorgans (13) befindet.

3. Kupplungsmechanismus (1) nach Anspruch 1 oder 2, **dadurch gekennzeichnet, dass** das Anschlagorgan (23) mit dem Pressorgan (20) in einem Bereich verbunden ist, der sich radial zwischen dem Erfassungsorgan (16) und dem Ausgleichsorgan (13) befindet.

4. Kupplungsmechanismus (1) nach einem der Ansprüche 1 bis 3, **dadurch gekennzeichnet, dass** das Anschlagorgan (23) mit dem Pressorgan (20) in einem Bereich verbunden ist, der sich radial auf halber Strecke zwischen dem Erfassungsorgan (16) und dem Ausgleichsorgan (13) befindet.

5. Kupplungsmechanismus (1) nach Anspruch 1 oder 2, **dadurch gekennzeichnet, dass** das Anschlagorgan (23) mit dem Pressorgan (20) in einem Bereich verbunden ist, der sich radial außerhalb des Ausgleichsorgans (13) befindet, oder in einem Bereich, der sich radial innerhalb des Erfassungsorgans (16) befindet.

6. Kupplungsmechanismus (1) nach einem der Ansprüche 1 bis 5, **dadurch gekennzeichnet, dass** jede Öffnung (12) der Membran (8) radial nach innen in Bezug auf den radial äußeren Umfang (30) des ringförmigen Abschnitts (10) der Membran (8) versetzt ist.

7. Kupplungsmechanismus (1) nach einem der Ansprüche 1 bis 5, **dadurch gekennzeichnet, dass** jede Öffnung (12) der Membran (8) radial im Bereich des radial äußeren Umfangs (30) des ringförmigen Abschnitts (10) der Membran (8) mündet.

8. Kupplungsmechanismus (1) nach einem der Ansprüche 1 bis 7, **dadurch gekennzeichnet, dass** das Pressorgan (20) eine auf das Erfassungsorgan (16) und das Ausgleichsorgan (13) verteilte Presskraft ausübt und die axiale Komponente dieser Kraft entlang der X-Achse über einen Anwendungsradius ausgeübt wird, der sich zwischen dem Erfassungsorgan (16) und dem Ausgleichsorgan (13) befindet.

9. Kupplungsmechanismus (1) nach einem der Ansprüche 1 bis 8, **dadurch gekennzeichnet, dass** das bewegliche Ausgleichsorgan (13) und das bewegliche Erfassungsorgan (16) konzentrisch sind.

10. Kupplungsmechanismus (1) nach einem der Ansprüche 1 bis 9, **dadurch gekennzeichnet, dass** das Anschlagorgan (23) ein mit einem festen Abschnitt (3) der Kupplungsvorrichtung verbundenes, beispielsweise mit einer Abdeckung (6) verbundenes Ende (25) und ein mit dem Pressorgan (20) verbundenes Ende (24) umfasst.

11. Kupplungsmechanismus (1) nach einem der Ansprüche 1 bis 10, **dadurch gekennzeichnet, dass** das Erfassungsorgan (16) und das Ausgleichsorgan (13), die im Allgemeinen kreisförmig sind, zumindest einen mit Ausbuchtungen versehenen Bereich (28) umfassen, in dem die beweglichen Organe (13, 16) in der radialen Richtung lokal voneinander beabstandet sind, wobei das Pressorgan (20) an den entsprechenden Enden der beweglichen Organe (13, 16) in dem mit Ausbuchtungen versehenen Bereich (28) anliegt.

12. Kupplungsmechanismus (1) nach einem der Ansprüche 1 bis 11, **dadurch gekennzeichnet, dass** das mit dem Pressorgan (20) verbundene Ende des Anschlagorgans (23) in dem mit Ausbuchtungen versehenen Bereich (28) angeordnet ist.

13. Kupplungsmechanismus (1) nach einem der Ansprüche 1 bis 12, **dadurch gekennzeichnet, dass** das Pressorgan (20) einen sich radial erstreckenden Abschnitt (21) umfasst, der dazu geeignet ist, am entsprechenden beweglichen Erfassungsorgan (16) und/oder am beweglichen Ausgleichsorgan (13) anzuliegen, wobei das Anschlagorgan (23) mit dem radialen Abschnitt (21) des Pressorgans (20) verbunden ist.

14. Kupplungsmechanismus (1) nach einem der Ansprüche 1 bis 13, **dadurch gekennzeichnet, dass** das Pressorgan (20) zwei Abschnitte (22) umfasst, die sich in Umfangsrichtung einander gegenüber vom radialen Abschnitt (21) des Pressorgans (20) erstrecken, wobei das freie Ende jedes Umfangsabschnitts (22) an der Druckplatte (2) befestigt ist, beispielsweise durch Nieten.

15. Kupplungsvorrichtung (1), umfassend einen Kupplungsmechanismus nach einem der Ansprüche 1 bis 14, eine Gegenanpressplatte (35), die dazu vorgesehen ist, mit einer Antriebswelle drehgekoppelt zu sein, und eine Reibscheibe (33), die dazu vorgesehen ist, mit einer Antriebswelle gekoppelt zu sein, wobei die Druckplatte (2) durch die Membran (8) betätigt wird, um die Reibscheibe (33) an der Gegenanpressplatte (35) festzuklemmen oder zu lösen.

## Claims

1. Clutch mechanism (1) with wear compensation, notably for a motor vehicle, comprising:
- a pressure plate (2) actuated by a diaphragm (8),
- wear detection and compensation means able to compensate for wearing of the friction disk, the wear detection and compensation means being interposed between a cover (3) and the pressure plate (2), the said wear detection and compensation means comprising:
- wear compensation means interposed between the diaphragm (8) and the pressure plate (2), the said wear compensation means comprising at least one compensation member (13) able to move in a determined range and comprising a ramp (14) collaborating with a counterramp (15) formed in the pressure plate (2) so as to adjust the distance between the diaphragm (8) and the pressure plate (2) and compensate for the corresponding wear according to the position of the ramp (14) with respect to the counterramp (15),
- wear detection means able to allow the said mobile compensation member (13) to move in the event of wear and able to prevent such movement when this wear is insufficient, the said detection means comprising at least one detection member (16) able to move, in a determined range, with respect to the mobile compensation member (13) and comprising a ramp (17) collaborating with a counterramp (15) formed in the pressure plate (2), the mobile compensation member (13) being stressed in such a way that it is urged to move when the said mobile compensation member (13) is released by the diaphragm (8),
- at least one pressing member (20) which forces at least the ramp (17) of the detection member (16) against the associated counterramp (15), the pressing member (20) being able to collaborate with a fixed thrust surface (27) so as to release the detection member (16) when wear is detected,
the mobile detection member (16) being stressed in such a way that it is urged to move and to at least partially compensate for the clearance (J1) between it and the pressing member (20), when the said mobile detection member (16) is released by the pressing member (20) and by the diaphragm (8),
- at least one thrust member (23) designed to move the pressing member (20) away from the detection member (16) and/or from the compensation member (13) in the event of wear,
the diaphragm (8) comprising at least an annular part (10) from which fingers (11) extend radially inwards,
**characterized in that** the thrust member (23) is connected to the pressing member (20) and **in that** the thrust member (23) passes through at least one orifice (12) created in the annular part (10) of the diaphragm (8).

2. Clutch mechanism (1) according to Claim 1, **characterized in that** the thrust member (23) is connected to the pressing member (20) in a zone situated radially in close proximity to the detection member (16) and/or to the compensation member (13).

3. Clutch mechanism (1) according to Claim 1 or 2, **characterized in that** the thrust member (23) is connected to the pressing member (20) in a zone situated radially between the detection member (16) and the compensation member (13).

4. Clutch mechanism (1) according to one of Claims 1 to 3, **characterized in that** the thrust member (23) is connected to the pressing member (20) in a zone situated radially midway between the detection member (16) and the compensation member (13).

5. Clutch mechanism (1) according to Claim 1 or 2, **characterized in that** the thrust member (23) is connected to the pressing member (20) in a zone situated radially on the outside of the compensation member (13) or in a zone situated radially on the inside of the detection member (16) .

6. Clutch mechanism (1) according to one of Claims 1 to 5, **characterized in that** each orifice (12) in the diaphragm (8) is offset radially towards the inside with respect to the radially external periphery (30) of the annular part (10) of the diaphragm (8).

7. Clutch mechanism (1) according to one of Claims 1 to 5, **characterized in that** each orifice (12) in the diaphragm (8) opens radially onto the radially external periphery (30) of the annular part (10) of the diaphragm (8).

8. Clutch mechanism (1) according to one of Claims 1 to 7, **characterized in that** the pressing member (20) applies a pressing force which is distributed between the detection member (16) and the compensation member (13), and the axial component of this force along the X-axis is applied over an application radius situated between the detection member (16) and the compensation member (13).

9. Clutch mechanism (1) according to one of Claims 1 to 8, **characterized in that** the mobile compensation member (13) and the mobile detection member (16) are concentric.

10. Clutch mechanism (1) according to one of Claims 1 to 9, **characterized in that** the thrust member (23) comprises an end (25) connected to a fixed part (3) of the clutch device, for example connected to a cover (6), and an end (24) connected to the pressing member (20).

11. Clutch mechanism (1) according to one of Claims 1 to 10, **characterized in that** the detection member (16) and the compensation member (13), of circular overall shape, comprise at least one zone (28) provided with bulging portions, in which zone the said mobile members (13, 16) are locally separated from one another in the radial direction, the pressing member (20) bearing against the corresponding ends of the mobile members (13, 16) in the said zone (28) provided with bulging portions.

12. Clutch mechanism (1) according to one of Claims 1 to 11, **characterized in that** the end of the thrust member (23) which is the end connected to the pressing member (20) is housed in the said zone (28) provided with bulging portions.

13. Clutch mechanism (1) according to one of Claims 1 to 12, **characterized in that** the pressing member (20) comprises a part (21) extending radially, which is able to come to bear against the mobile detection member (16) and/or against the corresponding mobile compensation member (13), the thrust member (23) being connected to the said radial part (21) of the pressing member (20).

14. Clutch mechanism (1) according to one of Claims 1 to 13, **characterized in that** the pressing member (20) comprises two parts (22) extending circumferentially facing one another from the radial part (21) of the pressing member (20), the free end of each circumferential part (22) being fixed, for example by rivets, to the pressure plate (2).

15. Clutch device (1) comprising a clutch mechanism according to one of Claims 1 to 14, a reaction plate (35) intended to be rotationally coupled to a driving shaft, and a friction disk (33) intended to be coupled to a driven shaft, the pressure plate (2) being actuated by the diaphragm (8) so as to clamp or release the friction disk (33) with respect to the reaction plate (35).
